(19) Europäisches Patentamt
European Patent Office
Office européen des brevets

(11) **EP 2 935 476 B1**

(12) **EUROPÄISCHE PATENTSCHRIFT**

(45) Veröffentlichungstag und Bekanntmachung des Hinweises auf die Patenterteilung:
**03.04.2019 Patentblatt 2019/14**

(21) Anmeldenummer: **13811881.5**

(22) Anmeldetag: **17.12.2013**

(51) Int Cl.:
*C09D 5/18* *(2006.01)*    *C08K 3/00* *(2018.01)*
*C08K 5/00* *(2006.01)*    *C09K 21/14* *(2006.01)*
*C09D 201/02* *(2006.01)*    *C08L 71/00* *(2006.01)*
*C08L 81/00* *(2006.01)*

(86) Internationale Anmeldenummer:
**PCT/EP2013/076866**

(87) Internationale Veröffentlichungsnummer:
**WO 2014/095834 (26.06.2014 Gazette 2014/26)**

(54) **DÄMMSCHICHTBILDENDE ZUSAMMENSETZUNG UND DEREN VERWENDUNG**

DAMP COURSE-FORMING COMPOSITION AND USE THEREOF

COMPOSITION FORMANT UNE COUCHE ISOLANTE ET UTILISATION DE LADITE COMPOSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2012 DE 102012224300**

(43) Veröffentlichungstag der Anmeldung:
**28.10.2015 Patentblatt 2015/44**

(73) Patentinhaber: **Hilti Aktiengesellschaft**
**9494 Schaan (LI)**

(72) Erfinder:
• **THIEMANN, Frank**
 **86899 Landsberg/Lech (DE)**
• **MARAUSKA, Juliane**
 **25524 Itzehoe (DE)**

(56) Entgegenhaltungen:
**WO-A1-2010/131037    DE-A1-102010 001 588**

EP 2 935 476 B1

**Beschreibung**

Die vorliegende Erfindung betrifft eine dämmschichtbildende Zusammensetzung, insbesondere eine zwei- oder mehrkomponentige Zusammensetzung mit intumeszierenden Eigenschaften, die ein Bindemittel auf Basis eines alkoxysilanfunktionalisierten Polymers, das alkoxyfunktionalisierte Silangruppen trägt, enthält, sowie deren Verwendung für den Brandschutz, insbesondere für Beschichtungen von Bauteilen, wie Stützen, Trägern, oder Fachwerkstäben, zur Erhöhung der Feuerwiderstandsdauer.

Dämmschichtbildende Zusammensetzungen, auch intumeszierende Zusammensetzungen genannt, werden üblicherweise zur Bildung von Beschichtungen auf die Oberfläche von Bauteilen aufgebracht, um diese vor Feuer oder gegen große Hitzeeinwirkung etwa in Folge eines Brandes zu schützen. Stahlkonstruktionen sind mittlerweile fester Bestandteil der modernen Architektur, auch wenn sie einen entscheidenden Nachteil im Vergleich zum Stahlbetonbau haben. Oberhalb von ca. 500°C sinkt die Lasttragekapazität des Stahls um 50%, d.h. der Stahl verliert seine Stabilität und seine Tragfähigkeit. Diese Temperatur kann je nach Brandbelastung, etwa bei direkter Feuereinwirkung (ca. 1000°C) bereits nach ca. 5-10 Minuten erreicht werden, was häufig zu einem Tragfähigkeitsverlust der Konstruktion führt. Zielsetzung des Brandschutzes, insbesondere des Stahlbrandschutzes ist es nun, die Zeitspanne bis zum Tragfähigkeitsverlust einer Stahlkonstruktion im Brandfall zur Rettung von Menschenleben und wertvollen Gütern möglichst lange hinauszuzögern.

In den Bauordnungen vieler Länder werden hierzu entsprechende Feuerwiderstandszeiten für bestimmte Bauwerke aus Stahl gefordert. Sie werden durch sogenannte F-Klassen wie F 30, F 60, F 90 (Feuerwiderstandsklassen nach DIN 4102-2) oder amerikanische Klassen nach ASTM usw. definiert. Dabei bedeutet nach DIN 4102-2 zum Beispiel F 30, dass eine tragende Stahlkonstruktion im Brandfall unter Normbedingungen mindestens 30 Minuten dem Feuer standhalten muss. Dies wird üblicherweise dadurch erreicht, dass die Aufheizgeschwindigkeit des Stahls verzögert wird, z. B. durch Überziehen der Stahlkonstruktion mit dämmschichtbildenden Beschichtungen. Hierbei handelt es sich um Anstriche, deren Bestandteile im Brandfall unter Ausbildung eines festen mikroporösen Kohleschaums aufschäumen. Dabei bildet sich eine feinporige und dicke Schaumschicht, die sogenannte Aschekruste, die je nach Zusammensetzung stark wärmeisolierend ist und so das Aufheizen des Bauteils verzögert, sodass die kritische Temperatur von ca. 500°C, frühestens nach 30, 60, 90, 120 Minuten oder bis zu 240 Minuten erreicht wird. Wesentlich für den erreichbaren Feuerwiderstand ist immer die aufgebrachte Schichtdicke der Beschichtung, bzw. der sich daraus entwickelnden Aschekruste. Geschlossene Profile, wie Rohre, benötigen bei vergleichbarer Massivität etwa die doppelte Menge verglichen mit offenen Profilen, wie Träger mit Doppel-T-Profil. Damit die geforderten Feuerwiderstandszeiten eingehalten werden, müssen die Beschichtungen eine bestimmte Dicke aufweisen und die Fähigkeit haben, bei Hitzeeinwirkung eine möglichst voluminöse und damit gut isolierende Aschekruste zu bilden, welche über den Zeitraum der Brandbeanspruchung mechanisch stabil bleibt.

Hierzu existieren im Stand der Technik verschiedene Systeme. Im Wesentlichen wird zwischen 100%-Systemen und lösemittel- bzw. wasserbasierten Systemen unterschieden. Bei den lösemittel- bzw. wasserbasierten Systemen werden Bindemittel, meist Harze, als Lösung, Dispersion oder Emulsion auf das Bauteil aufgetragen. Diese können als Ein- oder Mehrkomponenten-Systeme ausgeführt werden. Nach dem Auftragen verdunstet das Lösungsmittel bzw. das Wasser und hinterlässt einen Film, der mit der Zeit trocknet. Hierbei kann ferner zwischen solchen Systemen unterschieden werden, bei denen sich während der Trocknung die Beschichtung im Wesentlichen nicht mehr ändert, und solchen Systemen, bei denen nach dem Verdunsten das Bindemittel primär durch Oxidations- und Polymerisationsreaktionen härtet was beispielsweise durch den Luftsauerstoff induziert wird. Die 100%-Systeme enthalten die Bestandteile des Bindemittels ohne Lösungsmittel bzw. Wasser. Sie werden auf das Bauteil aufgetragen, wobei die "Trocknung" der Beschichtung lediglich durch Reaktion der Bindemittelbestandteile untereinander erfolgt.

Die Systeme auf Lösemittel- oder Wasserbasis haben den Nachteil, dass die Trockenzeiten, auch Aushärtezeiten genannt, lang sind und zudem mehrere Schichten aufgetragen werden müssen, also mehrerer Arbeitsgänge bedürfen, um die erforderliche Schichtdicke zu erreichen. Da jede einzelne Schicht vor dem Auftragen der nächsten Schicht entsprechend getrocknet sein muss, führt dies zum einen zu einem hohen Aufwand an Arbeitszeit und dementsprechend hohen Kosten und zu einer Verzögerung bei der Fertigstellung des Bauwerks, da je nach klimatischen Bedingungen zum Teil mehrere Tage vergehen, bis die erforderliche Schichtdicke aufgetragen ist. Nachteilig ist auch, dass durch die erforderliche Schichtdicke die Beschichtung während des Trocknens oder bei Hitzeeinwirkung zur Rissbildung und zum Abblättern neigen kann, wodurch im schlimmsten Fall der Untergrund teilweise freigelegt wird, insbesondere bei Systemen, bei denen das Bindemittel nicht nach Verdunsten des Lösungsmittels bzw. des Wassers nachhärtet.

Um diesen Nachteil zu umgehen, wurden Zwei- oder Mehrkomponentensysteme auf Epoxid-Amin-Basis entwickelt, die nahezu ohne Lösemittel auskommen, so dass eine Aushärtung wesentlich schneller erfolgt und zudem dickere Schichten in einem Arbeitsgang aufgetragen werden können, so dass die erforderliche Schichtdicke wesentlich schneller aufgebaut ist. Diese haben jedoch den Nachteil, dass das Bindemittel eine sehr stabile und starre Polymermatrix mit oftmals hohem Erweichungsbereich bildet, was die Schaumbildung durch die Schaumbildner behindert. Daher müssen dicke Schichten aufgetragen werden, um eine ausreichende Schaumdicke für die Isolierung zu erzeugen. Dies ist wiederum nachteilig, da viel Material erforderlich ist. Damit diese Systeme aufgetragen werden können, sind häufig Verarbeitungstemperaturen von bis zu +70°C erforderlich, was die Anwendung dieser Systeme arbeitsaufwendig und teuer in der Installation macht. Ferner sind einige der verwendeten Bindemittelkomponenten toxisch oder in sonstiger Weise kritisch (z.B. reizend, ätzend), wie beispielsweise die bei den Epoxid-Amin-Systemen eingesetzten Amine oder Aminmischungen.

Aus der WO 2010/131037 A1 ist eine Zusammensetzung bekannt, die auf Silanterminierten Polyurethanen oder Silanterminierten Polyethern als Bindemittel basiert, mit dazu kompatiblen Weichmachern und mit intumeszierenden Additiven. Diese Zusammensetzung härtet durch Feuchtigkeit aus. Dementsprechend beginnt die Aushärtung der Zusammensetzung an der Oberfläche. Dies ist jedoch dahingehend nachteilig, dass die Aushärtung stark von der Luftfeuchtigkeit und von der Schichtdicke abhängt, was im Allgemeinen zu langen Aushärtezeiten oder in sehr trockener Umgebung zu keiner Aushärtung mehr führt. Nachteilig ist ferner, dass die Aushärtung stark inhomogen ist und zudem die Vernetzungsdichte stark schwanken kann. Dokument DE 10 2010 001588 A1 offenbart eine zweikomponentige intumeszierende Zusammensetzung, welche einen ersten und einen zweiten Teil umfasst, wobei der erste Teil unter anderem einen silanterminierten Polyether und der zweite Teil einen Weichmacher und einen intumeszierenden Bestandteil enthält. Diese zweikomponentige Zusammensetzung härtet, in dem der erste und der zweite Teil zusammengebracht und der Luftfeuchtigkeit ausgesetzt werden. Der Erfindung lag daher die Aufgabe zugrunde, ein dämmschichtbildendes Beschichtungssystem der eingangs erwähnten Art zu schaffen, das die genannten Nachteile vermeidet, das insbesondere nicht lösemittel- oder wasserbasiert ist und eine schnelle, homogene Aushärtung aufweist und aufgrund der hohen Intumeszenz, d.h. der Bildung einer effektiven Aschekrustenschicht, nur eine geringe Schichtdicke erfordert.

Diese Aufgabe wird gelöst, indem der Zusammensetzung Wasser zugegeben wird. Insbesondere wird die Aufgabe durch die Zusammensetzung nach Anspruch 1 gelöst. Bevorzugte Ausführungsformen sind den Unteransprüchen zu entnehmen.

Gegenstand der Erfindung ist demnach eine dämmschichtbildende Zusammensetzung mit einem Bestandteil A, der ein alkoxysilanfunktionelles Polymer, welches terminiert und/oder als Seitengruppen entlang der Polymerkette alkoxyfunktionelle Silangruppen der allgemeinen Formel (I) enthält

$$-Si(R^1)_m(OR^2)_{3-m} \qquad (I),$$

worin $R^1$ für einen linearen oder verzweigten $C_1$-$C_{16}$-Alkylrest, bevorzugt für einen Methyl- oder Ethylrest, $R^2$ für einen linearen oder verzweigten $C_1$-$C_6$-Alkylrest und m für eine ganze Zahl von 0 bis 2 steht, mit einem Bestandteil B, der Wasser enthält, und mit einem Bestandteil C, der ein dämmschichtbildendes Additiv enthält. Insbesondere, ist der Gegenstand der Erfindung gemäß Anspruch 1 ein Zweikomponenten-System, welches umfasst: eine dämmschichtbildende Zusammensetzung mit einem Bestandteil A, der einen alkoxysilanfunktionellen Polyether, welcher terminiert und/oder als Seitengruppen entlang der Polymerkette alkoxyfunktionelle Silangruppen der allgemeinen Formel (I) enthält

$$-Si(R^1)_m(OR^2)_{3-m} \qquad (I),$$

worin $R^1$ für einen linearen oder verzweigten $C_1$-$C_{16}$-Alkylrest, $R^2$ für einen linearen oder verzweigten $C_1$-$C_6$-Alkylrest und m für eine ganze Zahl von 0 bis 2 steht, mit einem Bestandteil B, der aus Wasser besteht, und mit einem Bestandteil C, der ein Gemisch enthält, das gegebenenfalls mindestens einen Kohlenstofflieferant, mindestens einen Dehydrierungskatalysator und mindestens ein Treibmittel und/ oder mindestens eine thermisch expandierbare Verbindung umfasst, dadurch gekennzeichnet, dass die Bestandteile A und C in einer ersten Komponente und der Bestandteil B in einer von der ersten Komponente reaktionsinhibierend getrennten zweiten Komponente enthalten sind.

Erfindungsgemäß ist ein Polymer ein Molekül mit sechs oder mehr Wiederholungseinheiten, das eine Struktur aufweisen kann, die linear, verzweigt, sternförmig, gewunden, hyperverzweigt oder vernetzt sein kann. Polymere können eine einzelne Art von Wiederholungseinheiten aufweisen ("Homopolymere") oder sie können mehr als eine Art von Wiederholungseinheiten aufweisen ("Copolymere"). Wie hierin verwendet, umfasst der Begriff *"Polymer"* sowohl Präpolymere, welche auch Oligomere mit 2 bis 5 Wiederholungseinheiten umfassen können, wie die als Bestandteil A eingesetzten alkoxysilanfunktionellen Verbindungen, welche in Gegenwart von Wasser unter Bildung von Si-O-Si-Bindungen miteinander reagieren, als auch die durch die eben genannte Reaktion gebildeten polymeren Verbindungen. Damit die Bestandteile A und B nicht vorzeitig miteinander in Kontakt gebracht werden und die Aushärtung vorzeitig initiiert wird, sind der Bestandteil A und der Bestandteil B zweckmäßig reaktionsinhibierend voneinander getrennt.

Durch die erfindungsgemäße Zusammensetzung können in einfacher und schneller Weise Beschichtungen mit der für die jeweilige Feuerwiderstandsdauer erforderlichen Schichtdicke aufgetragen werden. Die durch die Erfindung erreichten Vorteile sind im Wesentlichen darin zu sehen, dass im Vergleich zu den Systemen auf Lösemittel- oder Wasserbasis mit ihren inhärenten langsamen Aushärtezeiten aber auch im Vergleich zu einer Zusammensetzung gemäß der WO 2010/131037 A1 die Arbeitszeit erheblich reduziert werden kann und dass kein Lösemittel verwendet wird.

Vorteilhaft, insbesondere gegenüber einer Zusammensetzung gemäß der WO 2010/131037 A1, ist ferner, dass das Aushärteverhalten einer erfindungsgemäßen Zusammensetzung unabhängig von der Luftfeuchtigkeit der Umgebung ist, in der die Zusammensetzung angewandt wird.

Ein weiterer Vorteil liegt darin, dass auf gesundheitsgefährdende und kennzeichnungspflichtige Substanzen, wie beispielsweise kritische Aminverbindungen, weitgehend oder vollständig verzichtet werden kann.

Aufgrund des gegenüber den Systemen auf Epoxid-Amin-Basis niedrigeren Erweichungsbereiches der Polymermatrix ist die Intumeszenz hinsichtlich der Expansionsrate relativ hoch, so dass selbst mit dünnen Schichten eine große isolierende Wirkung erreicht wird. Hierzu trägt auch der mögliche hohe Füllgrad der Zusammensetzung mit Brandschutzadditiven bei. Dementsprechend sinkt der Materialaufwand, was sich insbesondere beim großflächigen Auftragen günstig auf die Materialkosten auswirkt. Erreicht wird dies insbesondere durch die Nutzung eines reaktiven Systems, das nicht physikalisch trocknet, sondern chemisch durch Hydrolyse und anschließende Polykondensation härtet. Damit ist nur ein geringer Volumenverlust durch das Abtrocknen von Lösemitteln oder bei wasserbasierten Systemen von Wasser zu verzeichnen. So ist bei einem klassischen System ein Lösemittelgehalt von etwa 25% typisch. Dies bedeutet, dass aus einer 10 mm-Schicht nur 7,5 mm als eigentliche Schutzschicht auf dem zu schützenden Substrat verbleiben. Bei der erfindungsgemäßen Zusammensetzung verbleiben mehr als 93% der Beschichtung auf dem zu schützenden Substrat.

Verglichen mit lösemittel- oder wasserbasierten Systemen, wenn sie ohne Grundierung aufgetragen werden, zeigen die erfindungsgemäßen Zusammensetzungen eine ausgezeichnete Haftung an unterschiedlichen metallischen und nicht metallischen Substraten, sowie eine ausgezeichnete Kohäsion und Schlagbeständigkeit.

Zum besseren Verständnis der Erfindung werden die folgenden Erläuterungen der hierin verwendeten Terminologie als sinnvoll erachtet. Im Sinne der Erfindung:

- bedeutet *"chemische Intumeszenz"* die Bildung einer voluminösen, isolierenden Ascheschicht durch aufeinander abgestimmte Verbindungen, die bei Hitzeeinwirkung miteinander reagieren;

- bedeutet *"physikalische Intumeszenz"* die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt;

- bedeutet *"dämmschichtbildend",* dass im Brandfall ein fester mikroporöser Kohleschaums entsteht, so dass die gebildete feinporige und dicke Schaumschicht, die sogenannte Aschekruste, je nach Zusammensetzung ein Substrat gegen Hitze isoliert;

- ist ein *"Kohlenstofflieferant"* eine organische Verbindung, die durch unvollständige Verbrennung ein Kohlenstoffgerüst hinterlässt und nicht vollständig zu Kohlendioxid und Wasser verbrennt (Carbonifizierung); diese Verbindungen werden auch als *"Kohlenstoffgerüstbildner"* bezeichnet;

- ist ein *"Säurebildner"* eine Verbindung, die unter Hitzeeinwirkung, d.h. oberhalb etwa 150°C beispielsweise durch Zersetzung eine nicht flüchtige Säure bildet und dadurch als Katalysator für die Carbonifizierung wirkt; zudem kann sie zur Erniedrigung der Viskosität der Schmelze des Bindemittels beitragen; hiermit gleichbedeutend wird der Begriff *"Dehydrierungskatalysator"* verwendet;

- ist ein *"Treibmittel"* eine Verbindung, die sich bei erhöhter Temperatur unter Entwicklung inerter, d.h. nicht-brennbarer Gase zersetzt und gegebenenfalls das Erweichte Bindemittel zu einem Schaum aufbläht (Intumeszenz); dieser Begriff wird gleichbedeutend mit *"Gasbildner"* verwendet;

- ist ein *"Aschekrustenstabilisator"* eine sogenannte gerüstbildende Verbindung, die das Kohlenstoffgerüst (Aschekruste), das aus dem Zusammenwirken der Kohlenstoffbildung aus der Kohlenstoffquelle und dem Gas aus dem Treibmittel, oder der physikalischen Intumeszenz gebildet wird, stabilisiert. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern.

Erfindungsgemäß umfasst das alkoxysilanfunktionelle Polymer ein Grundgerüst, das aus der Gruppe, bestehend aus einem Polyether, Polyester, Polyetherester, Polyamid, Polyurethan, Polyesterurethan, Polyetherurethan, Polyetheresterurethan, Polyamidurethan, Polyharnstoff, Polyamin, Polycarbonat, Polyvinylester, Polyacrylat, Polyolefin, wie Polyethylen oder Polypropylen, Polyisobutylen, Polysulfid, Kautschuk, Neopren, Phenolharz, Epoxidharz, Melamin ausgewählt ist. Das Grundgerüst kann dabei linear oder verzweigt (lineares Grundgerüst mit Seitenketten entlang der Kette des Grundgerüstes) aufgebaut sein und enthält terminierend, d.h. als Endgruppen eines linearen Grundgerüstes bzw. als Endgruppen des linearen Grundgerüstes und als Endgruppen der Seitengruppen, alkoxyfunktionelle Silangruppen, bevorzugt mindestens zwei alkoxyfunktionelle Silangruppen.

Die alkoxyfunktionelle Silangruppe hat die allgemeinen Formel (I)

$$-Si(R^1)_m(OR^2)_{3-m} \qquad (I),$$

worin $R^1$ für einen linearen oder verzweigten $C_1$-$C_{16}$-Alkylrest, bevorzugt für einen Methyl- oder Ethylrest, $R^2$ für einen linearen oder verzweigten $C_1$-$C_6$-Alkylrest, bevorzugt für einen Methyl- oder Ethylrest, und m für eine ganze Zahl von 0 bis 2, bevorzugt 0 oder 1 steht. Am stärksten bevorzugt sind die mindestens zwei alkoxyfunktionellen Silangruppen di-(m = 1) oder trifunktionell (m = 0) und die Alkoxygruppe ist eine Methoxy- oder Ethoxygruppe.

Bevorzugt ist die alkoxyfunktionelle Silangruppe über eine Gruppe, wie eine weitere, andere funktionelle Gruppe (X = z.B. -S-, -OR, -NHR, -NR$_2$), die entweder selbst als Elektronendonor fungieren kann oder ein Atom enthält, welches als Elektronendonor fungieren kann, an das Grundgerüst gebunden, wobei die beiden funktionellen Gruppen, d.h. die weitere funktionelle Gruppe und die alkoxyfunktionellen Silangruppe über eine Methylenbrücke miteinander verbunden sind (-X-CH$_2$-Si(R$^1$)$_m$(OR$^2$)$_{3-m}$). Hierdurch wird eine elektronische Wechselwirkung (Back-Bonding) zwischen dem Siliziumatom und dem Elektronendonor bedingt, wobei Elektronendichte vom Donor auf das Siliziumatom verschoben wird, was zu einer Schwächung der Si-O-Bindung führt, das sich wiederum in einer stark erhöhten Reaktivität der Si-Alkoxygruppen niederschlägt. Hierbei handelt es sich um den sogenannten α-Effekt. Solche Verbindungen werden auch als α-Silane bezeichnet.

Am stärksten bevorzugt handelt es sich bei den alkoxysilanfunktionellen Polymeren um Polymere, bei denen das Grundgerüst über eine Urethangruppe mit Silangruppen terminiert ist, wie beispielsweise Dimethoxy(methyl)silyl-methylcarbamat-terminierte Polyether, Diethoxy(methyl)silyl-methylcarbamat-terminierte Polyether, Trimethoxysilylmethylcarbamat-terminierte Polyether, Triethoxysilylmethylcarbamatterminierte Polyether oder Mischungen aus diesen.

Beispiele geeigneter Polymere umfassen silanterminierte Polyether (z.B. Geniosil® STP-E 10 und Geniosil® STP-E 30 von Wacker Chemie AG) und silanterminierte Polyurethane (z.B. Polymer ST61, Polymer ST75 und Polymer ST77 von Evonik Hanse, Desmoseal® S XP 2458, Desmoseal® S XP 2636, Desmoseal® S XP 2749, Desmoseal® S XP 2821 von Bayer, SPUR+*1050MM, SPUR+*1015LM, SPUR+* 3100HM, SPUR+* 3200HM von Momentive).

Gewöhnlich beträgt bei diesen alkoxysilanfunktionellen Polymeren der Gehalt an Alkoxygruppen 0,20 bis 1,0 mmol/g, bevorzugt 0,2 - 0,85 mmol/g, weiter bevorzugt 0,25 bis 0,80 mmol/g, noch weiter bevorzugt 0,25 bis 0,70 mmol/g, stärker bevorzugt 0,30 bis 0,70 mmol/g, stärker bevorzugt 0,35 bis 0,70 mmol/g und noch stärker bevorzugt 0,40 bis 0,60 mmol/g.

Als alternative Polymere können bevorzugt solche verwendet werden, bei denen die alkoxyfunktionellen Silangruppen nicht terminal in das Gerüst des Polymers eingebaut werden, sondern gezielt seitenständig verteilt über die Kette des Grundgerüstes. Über die eingebauten mehreren Vernetzungseinheiten können wichtige Eigenschaften, wie die Vernetzungsdichte, gesteuert werden. Als geeignetes Beispiel kann hier die Produktlinie TEGOPAC® der Evonik Goldschmidt GmbH genannt werden, wie TEGOPAC BOND 150, TEGOPAC BOND 250 und TEGOPAC SEAL 100. In diesem Zusammenhang wird beispielhaft auf die DE 102008000360 A1, die DE 102009028640 A1, die DE 102010038768 A1 und die DE 102010038774 A1 und verwiesen.

Gewöhnlich trägt bei diesen alkoxysilanfunktionellen Polymeren das Polymer 2 bis 8 alkoxysilanfunktionelle Silangruppen pro Präpolymer-Molekül.

Je nach Alkoxyfunktionalität des Polymers und Sitz der alkoxyfunktionellen Silangruppen können der Vernetzungsgrad des Bindemittels und somit sowohl die Festigkeit der entstehenden Beschichtung als auch deren elastische Eigenschaften eingestellt werden.

Gewöhnlich beträgt die Menge des Bindemittels 5 bis 50 Gew.-%, bevorzugt 5 bis 40 Gew.-%, stärker bevorzugt 6 bis 35 Gew.-% und noch stärker bevorzugt 10 bis 30 Gew.-%, bezogen auf die Zusammensetzung.

Erfindungsgemäß enthält die Zusammensetzung Wasser als weiteren Bestandteil B. Das Wasser fungiert dabei im Wesentlichen als Vernetzungsmittel bzw. als Reaktand. Hierdurch wird eine homogenere und schnellere Durchhärtung des Bindemittels erreicht, verglichen mit einer Zusammensetzung gemäß der WO 2010/131037 A1. Die Aushärtung der Zusammensetzung wird somit weitgehend unabhängig von der absoluten Luftfeuchtigkeit und die Zusammensetzung härtet auch unter extrem trockenen Bedingungen zuverlässig und schnell aus.

Erfindungsgemäß kann der Wassergehalt in der Zusammensetzung bis zu 5 Gew.-% bezogen auf das Polymer, betragen, wobei ein Gehalt im Bereich zwischen 0,1 und 5 Gew.-% bevorzugt, zwischen 0,5 und 3 Gew.-% stärker bevorzugt und zwischen 0,6 und 2 Gew.-% noch stärker bevorzugt ist.

Erfindungsgemäß enthält der Bestandteil C ein dämmschichtbildendes Additiv, wobei das Additiv sowohl einzelne Verbindungen als auch ein Gemisch von mehreren Verbindungen umfassen kann.

Zweckmäßig werden als dämmschichtbildende Additive solche eingesetzt, die durch die Bildung einer sich unter Hitzeeinwirkung bildenden, aufgeblähten, isolierenden Schicht aus schwerentflammbaren Material, die das Substrat vor Überhitzung schützt und dadurch die Veränderung der mechanischen und statischen Eigenschaften tragender Bauteile durch Hitzeeinwirkung verhindert oder zumindest verzögert, wirken. Die Bildung einer voluminösen, isolierenden Schicht, nämlich einer Asicheschicht, kann durch die chemische Reaktion eines Gemisches aus entsprechenden aufeinander abgestimmter Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch physikalische Intumeszenz gebildet werden. Beide Systeme können jeweils alleine oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator und ein Treibmittel, die beispielsweise bei Beschichtungen in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich das Treibmittel thermisch unter Bildung inerter Gase, die ein Aufblähen des carbonisierten (verkohlten) Materials und gegebenenfalls das erweichte Bindemittel unter Bildung eines voluminösen, isolierenden Schaums bewirkt.

In einer Ausführungsform der Erfindung, in der die isolierende Schicht durch chemische Intumeszenz gebildet wird, umfasst das dämmschichtbildende Additiv mindestens einen Kohlenstoffgerüstbildner sofern das Bindemittel nicht als solcher verwendet werden kann, mindestens einen Säurebildner, mindestens ein Treibmittel und mindestens einen anorganischen Gerüstbildner. Die Komponenten des Additivs werden insbesondere so ausgewählt, dass sie einen Synergismus entwickeln können, wobei einige der Verbindungen mehrere Funktionen erfüllen können.

Als Kohlenstofflieferant kommen die in intumeszierenden Flammschutzmitteln üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, EO-PO-Polyole. Bevorzugt werden Pentaerythrit, Dipentaerythrit oder Polyvinylacetat eingesetzt.

Es sei erwähnt, dass das Bindemittel im Brandfall selbst auch die Funktion eines Kohlenstofflieferanten haben kann.

Als Dehydrierungskatalysatoren bzw. Säurebildner kommen die in intumeszierenden Brandschutzformulierungen üblicherweise verwendeten und dem Fachmann bekannten Verbindungen in Betracht, wie ein Salz oder ein Ester einer anorganischen, nicht flüchtigen Säure, ausgewählt unter Schwefelsäure, Phosphorsäure oder Borsäure. Im wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Als Treibmittel kommen die üblicherweise in Flammschutzmitteln verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Treibmittel wirkt. Weitere Beispiele sind in der GB 2 007 689 A1, EP 139 401 A1 und US-3 969 291 A1 beschrieben.

In einer Ausführungsform der Erfindung, in der die isolierende Schicht durch physikalische Intumeszenz gebildet wird, umfasst das dämmschichtbildende Additiv mindestens eine thermisch expandierbare Verbindung, wie eine Graphit-Interkalationsverbindung, die auch als Blähgraphit bekannt sind. Diese können ebenfalls im Bindemittel, insbesondere homogen enthalten sein.

Als Blähgraphit kommen beispielsweise bekannte Einlagerungsverbindungen von $SO_x$, $NO_x$, Halogen und/oder starken Säuren in Graphit in Frage. Diese werden auch als Graphitsalze bezeichnet. Bevorzugt sind Blähgraphite, die bei Temperaturen von beispielsweise 120 bis 350°C unter Aufblähen $SO_2$, $SO_3$, NO und/oder $NO_2$ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzelementen gleichmäßig verteilt. Die Konzentration an Blähgraphitteilchen kann aber auch punktuell, musterartig, flächig und/oder sandwichartig variiert sein. In dieser Hinsicht wird Bezug genommen auf die EP 1489136 A1, deren Inhalt hiermit in diese Anmeldung aufgenommen wird.

In einer weiteren Ausführungsform der Erfindung wird die isolierende Schicht sowohl durch chemische als auch durch physikalische Intumeszenz gebildet, so dass das dämmschichtbildende Additiv sowohl einen Kohlenstofflieferant, einen Dehydrierungskatalysator und ein Treibmittel als auch thermisch expandierbare Verbindungen umfasst.

Da die im Brandfall gebildete Aschekruste in der Regel zu instabil ist und abhängig von deren Dichte und Struktur etwa durch Luftströmungen verblasen werden kann, was sich negativ auf die isolierende Wirkung der Beschichtung auswirkt, wird zu den eben aufgeführten Komponenten bevorzugt mindestens ein Aschekrustenstabilisator gegeben.

Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von ≤50 μm, vorzugsweise von 0,5 bis 10 μm besitzt. Im Fall der Verwendung des teilchenförmigen Metalls in Form von Fasern, Fäden und/oder Whiskers ist eine Dicke von 0,5 bis 10 μm und eine Länge von 10 bis 50 μm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Optional können der erfindungsgemäßen Zusammensetzung ein oder mehrere reaktive Flammhemmer zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate, wie beispielsweise DOPO-HQ, DOPO-NQ, und Addukte. Solche Verbindungen sind beispielsweise beschrieben in S. V Levchik, E. D Weil, Polym. Int. 2004, 53, 1901-1929.

Das dämmschichtbildende Additiv kann in einer Menge von 30 bis 99 Gew.-% in der Zusammensetzung enthalten sein, wobei die Menge im Wesentlichen von der Applikationsform der Zusammensetzung (Sprühen, Pinseln und dergleichen) abhängt. Um eine möglichst hohe Intumeszenzrate zu bewirken, wird der Anteil des Bestandteils C in der Gesamtformulierung so hoch wie möglich eingestellt. Bevorzugt beträgt der Anteil des Bestandteils C in der Gesamtformulierung 35 bis 85 Gew.-% und besonders bevorzugt 40 bis 85 Gew.-%.

In einer Ausführungsform enthält die erfindungsgemäße Zusammensetzung ferner mindestens einen weiteren Bestandteil, ausgewählt unter Weichmachern, Vernetzungsmitteln, Wasserfängern, organischen und/oder anorganischen Zuschlagstoffen und/oder weiteren Additiven enthält.

Der Weichmacher hat die Aufgabe, das ausgehärtete Polymernetzwerk weich zu machen. Ferner hat der Weichmacher die Aufgabe, eine zusätzliche flüssige Komponente einzubringen, so dass die Füllstoffe vollständig benetzt werden und die Viskosität so eingestellt wird, dass die Beschichtung verarbeitungsfähig wird. Der Weichmacher kann in solch einer Menge in der Zusammensetzung enthalten sein, dass er die eben beschriebenen Funktionen hinreichend erfüllen kann.

Geeignete Weichmacher sind unter Derivaten der Benzoesäure, Phthalsäure, z.B. Phthalate, wie Dibutyl-, Dioctyl-, Dicyclohexyl-, Diisooctyl-, Diisodecyl-, Dibenzyl- oder Butylbenzylphthalat, Trimellitsäure, Pyromellitsäure, Adipinsäure, Sebacinsäure, Fumarsäure, Maleinsäure, Itaconsäure, Caprylsäure und Zitronensäure, Alkylphosphatestern und Derivaten von Polyestern und Polyethern, epoxidierten Ölen, $C_{10}$-$C_{21}$-Alkylsulfonsäureestern des Phenols und Alkylestern ausgewählt. Bevorzugt ist der Weichmacher ein Esterderivat der Terephthalsäure, ein Triol-Ester der Caprylsäure, ein Glykoldiester, Diol-Ester aliphatischer Dicarbonsäuren, Esterderivat der Zitronensäure, sekundärer Alkylsulfonsäureester, Esterderivate des Glycerin mit Epoxidgruppen und Esterderivate der Phosphate. Am stärksten bevorzugt ist der Weichmacher Bis(2-ethylhexyl)terephthalat, Trihydroxymethylpropylcaprylat, Triethylenglycol-bis(2-ethylhexanoat), 1,2-Cyclohexandicarboxylsäure-diisononylester, ein Gemisch aus 75-85 % sekundärer Alkylsulfonsäureester, 15-25 % sekundärer Alkandisulfonsäurediphenylester sowie 2-3 % nicht sulfonierter Alkane, Triethylcitrat, epoxidiertes Sojabohnenöl, Tri-2-ethylhexylphosphat oder ein Gemisch aus n-Octyl- und *n*-Decylsuccinat.

Kommerziell erhältliche Beispiele für Weichmacher sind Eastman® DOTP Plasticizer (Eastman Chemical Company), Esterex® NP 343 (Excon Mobil Corporation), Solusolv® 2075 (Solutia Inc.), Hexamoll® DINCH (BASF SE), Mesamoll® II (Lanxess Deutschland GmbH), Triethylcitrat (Sigma Aldrich), Paraplex® G-60 (Hallstar Company), Disflammol® TOF (Lanxess Deutschland GmbH) und Uniplex® LXS TP ODS (Lanxess Deutschland GmbH).

In der Zusammensetzung kann der Weichmacher bevorzugt in einer Menge von 0,1 bis 40 Gew.-%, stärker bevorzugt 1 bis 35 Gew.-% und noch stärksten bevorzugt 5 bis 25 Gew.-%, bezogen auf die gesamte Zusammensetzung, enthalten sein.

Ferner kann die Zusammensetzung mindestens einen Katalysator oder ein weiteres Vernetzungsmittel enthalten, wobei dieses, sofern vorhanden, reaktionsinhibierend von dem Bestandteil B getrennt ist. Durch das Vernetzungsmittel können verschiedene Eigenschaften, wie Haftung zum Untergrund, bessere Benetzung der Additive und Aushärtungsgeschwindigkeit der Zusammensetzung gezielt optimiert und maßgeschneidert werden.

Geeignete Katalysatoren sind unter reinen zinnhaltigen Verbindung ausgewählt. Geeignete weitere Vernetzungsmittel sind unter einem reaktiven Alkoxysilan oder einem oligomeren organofunktionellen Alkoxysilan ausgewählt. Bevorzugt ist der Katalysator eine zinnorganylhaltige Verbindung. Bevorzugt ist das weitere Vernetzungsmittel ein oligomeres vinylfunktionelles Alkoxysilan, ein oligomeres amino-/alkylfunktionelles Alkoxysilan, ein oligomeres aminofunktionelles Alkoxysilan, ein aminofunktionelles Alkoxysilan, ein alkylfunktionelles Alkoxysilan, ein epoxyfunktionelles Alkoxysilan, ein vinylfunktionelles Alkoxysilan, ein vinyl-/alkylfunktionelles Alkoxysilan, ein mercaptofunktionelles Alkoxysilan, ein methacrylfunktionelles Alkoxysilan oder ein Kieselsäureester.

Geeignete Katalysatoren bzw. weitere Vernetzungsmittel sind beispielsweise: Dibutylzinndilaurat (DBTL), Dioctylzinndilaurat (DOTL), welches aufgrund seiner weniger toxischen Eigenschaften gegenüber dem DBTL bevorzugt ist, Hexadecyltrimethoxysilan, *iso*-Butyltriethoxysilan, *iso*-Butyltrimethoxysilan, Methyltriethoxysilan, Methyltrimethoxysilan, Octyltrichlorosilan, Octyltriethoxysilan, Propyltriethoxysilan, Propyltrimethoxysilan, Bis(3-triethoxysilylpropyl)amin, Bis(3-trimethoxysilylpropyl)amin, 3-Aminopropylmethyldiethoxysilan, 3-Aminopropyltriethoxysilan, 3-Aminopropyltrimethoxysilan, 2-Aminoethyl-3-amino-propylmethyldimethoxysilan, 2-Aminoethyl-3-amino-propyltrimethoxysilan, 3-Glycidyloxypropyltriethoxysilan, 3-Glycidyloxypropyltrimethoxysilan, 3-Mercaptoprobyltrimethoxysilan, 3-Methacryloxypropyltrimethoxysilan, Methacryloxymethyl-methyldimethoxysilan, Methacryloxymethyl-timethoxysilan, 3-Methacryloxypropyltriacetoxysilan, Ethylpolysilicat, Tetraethylorthosilicat, Tetramethylorthosilicat, Tetra-n-Propylorthosilicat, Vinyltrichlorsilan, Vinyltriethoxysilan, Vinyltrimethoxysilan, Vinyltriacetoxysilan, Vinyltris(2-methoxyethoxy)silan, *N*-Cyclohexylaminomethyltriethoxysilan, Cyclohexyl-3-aminopropyltrimethoxysilan, *N*-(2-Aminoethyl)-3-aminopropyltrimethoxysilan, 3-(2-Aminomethylamino)propyltriethoxysilan, *N*-(2-Aminoethyl)-3-amino-prolymmethyldimethoxysilan, 3-Ureidopropyltrimethoxysilan, *N*-Methyl[3-(Trimethoxysilyl)propyl]carbamat, *N*-Trimethoxysilylmethyl-O-methylcarbamat, *N*-Dimethoxy(methyl)silyl-methyl-O-methylcarbamat, Tris-[3-(trimethoxysilyl)propyl]-isocyanurat oder Kombinationen aus diesen.

Kommerziell erhältliche Beispiele hierfür sind: Dynasylan® 1146, Dynasylan® 6490, Dynasylan® 6498, Dynasylan® SIVO 210, Dynasylan® SIVO 214, Dynasylan® 9116, Dynasylan® IBTEO, Dynasylan® IBTMO, Dynasylan® MTES, Dynasylan® MTMS, Dynasylan® OCTCS, Dynasylan® OCTEO, Dynasylan® OCTMO, Dynasylan® PTEO, Dynasylan® PTMO, Dynasylan® 1122, Dynasylan® 1124, Dynasylan® 1133, Dynasylan® 1204, Dynasylan® 1505, Dynasylan® 1506, Dynasylan® AMEO, Dynasylan® AMEO-T, Dynasylan® AMMO, Dynasylan® 1411, Dynasylan® DAMO, Dynasylan® DAMO-T, Dynasylan® GLYEO, Dynasylan® GLYMO, Dynasylan® MTMO, Dynasylan® MEMO, Dynasylan® 40, Dynasylan® A, Dynasylan® M, Dynasylan® P, Dynasylan® VTC, Dynasylan® VTEO, Dynasylan® VTMO, Dynasylan® VTMOEO, Dynasylan® 6598 (jeweils der Evonik Industries AG), Geniosil® GF9, Geniosil® GF 91, Geniosil® GF 92, Geniosil® XL 926, Geniosil® GF 93, Geniosil® GF 94, Geniosil® GF 95, Geniosil® GF 96, Geniosil® GF 98, Geniosil® XL 10, Geniosil® XL 12, Geniosil® GF 56, Geniosil® GF 62, Geniosil® GF 31, Geniosil® XL 32, Geniosil® XL 33, Geniosil® GF 39, Geniosil® GF 60, Geniosil® XL 63, Geniosil® XL 65, Geniosil® GF 69, Geniosil® GF 80 und Geniosil® GF 82 (jeweils der Wacker Chemie AG).

Das weitere Vernetzungsmittel kann, einzeln oder als Gemisch von mehreren, bevorzugt in einer Menge von 0,1 bis 10 Gew.-%, bezogen auf das Bindemittel, stärker bevorzugt von 0,5-7 Gew.-% und am stärksten bevorzugt von 1-5 Gew.-%, enthalten sein.

Um eine vorzeitige Reaktion des alkoxysilanfunktionellen Polymers mit Restfeuchtigkeit aus gegebenenfalls in der Zusammensetzung enthaltenen Bestandteilen, insbesondere Füllstoffen und/oder Additiven, oder der Luftfeuchtigkeit zu verhindern, werden der Zusammensetzung üblicherweise Wasserfänger zugesetzt. Dadurch wird in die Formulierungen eingetragene Feuchtigkeit abgefangen. Bevorzugt ist der Wasserfänger ein organofunktionelles Alkoxysilan oder ein oligomeres organofunktionelles Alkoxysilan, stärker bevorzugt ein vinylfunktionelles Alkoxysilan, ein oligomeres vinylfunktionelles Alkoxysilan, ein vinyl-/alkylfunktionelles Alkoxysilan, ein oligomeres amino-/alkylfunktionelles Alkoxysilan, ein acetoxy-/alkylfunktionelles Alkoxysilan, ein aminofunktionelles Alkoxysilan, ein oligomeres aminfunktionelles Alkoxysilan, ein Carbamatosilan oder ein methacryloxyfunktionelles Alkoxysilan. Am stärksten bevorzugt ist der Wasserfänger Di-*tert*-butoxydiacetoxysilan, Bis(3-triethoxysilylpropyl)amin, Bis(3-trimethoxypropyl)amin, 3-Aminopropylmethyldiethoxysilan, 3-Aminopropyltriethoxysilan, Vinyltriethoxysilan, Vinyltrimethoxysilan, Vinyltris(2-methoxyethoxy)silan, *N*-Cyclohexylaminomethyltriethoxysilan, Vinyldimethoxymethylsilan, Vinyltriacetoxysilan, 3-Methacryloxypropyltrimethoxysilan, Methacryloxymethyl-methyldimethoxysilan, Methacryloxymethyltrimethoxysilan, 3-Methacryloxypropyltriacetoxysilan, *N*-Methyl[3-(Trimethoxysilyl)propyl]carbamat, *N*-Trimethoxysilylmethyl-O-methylcarbamat, *N*-Dimethoxy(methyl)silyl-methyl-*O*-methylcarbamat oder Kombinationen aus diesen.

Kommerziell erhältliche Beispiele hierfür sind: Dynasylan® 1146, Dynasylan® 6490, Dynasylan® 6498, Dynasylan® BDAC, Dynasylan® 1122, Dynasylan® 1124, Dynasylan® 1133, Dynasylan® 1204, Dynasylan® 1505, Dynasylan® 1506, Dynasylan® AMEO, Dynasylan® AMEO-T, Dynasylan® VTEO, Dynasylan® VTMO, Dynasylan® VTMOEO, Dynasylan® 6598 (jeweils der Evonik Industries AG), Geniosil® XL 926, Geniosil® XL 10, Geniosil® XL 12, Geniosil® GF 56, Geniosil® GF 62, Geniosil® GF 31, Geniosil® XL 32, Geniosil® XL 33, Geniosil® GF 39, Geniosil® GF 60, Geniosil® XL 63 und Geniosil® XL 65 (jeweils der Wacker Chemie AG).

Die zugesetzte Menge an Wasserfänger richtet sich nach dem Wassergehalt der Bestandteile der Formulierung, ausgenommen dem extra zugegeben Wasser (Bestandteil B) und liegt üblicherweise im Bereich von ca. 1 Gew. %. Die Wasserfänger können in einer Menge von 0,1 bis 2 Gew.-%, bezogen auf die gesamte Zusammensetzung, bevorzugt von 0,2 bis 2 Gew.-%, stärker bevorzugt von 0,2 bis 1,8 Gew.-% und noch stärker bevorzugt 0,25 bis 1,5 Gew.-%, enthalten sein.

Die Zusammensetzung kann neben den bereits beschriebenen Additiven gegebenenfalls übliche Hilfsmittel wie Netzmittel, etwa auf Basis von Polyacrylaten und/oder Polyphosphaten, Entschäumer, wie Silikonentschäumer, Farbstoffe, Fungizide, oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive, wie Verdicker und/oder Rheologieadditive, sowie Füllstoffe können der Zusammensetzung zugegeben werden. Als Rheologieadditive, wie Anti-Absetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan Gummi.

Die erfindungsgemäße Zusammensetzung wird als Zwei- oder Mehrkomponenten-System konfektioniert. Bevorzugt ist sie als Zweikomponenten-System konfektioniert, in dem der Bestandteil A und der Bestandteil B reaktionsinhibierend auf zwei Komponenten, Komponente I und Komponente II, aufgeteilt sind.

Die weiteren Bestandteile der Zusammensetzung sind entsprechend ihrer Verträglichkeit untereinander und mit den in der Zusammensetzung enthaltenen Verbindungen aufgeteilt und können in einer der beiden Komponenten oder in beiden Komponenten enthalten sein. Zweckmäßig sind der Wasserfänger und das Vernetzungsmittel, sofern zugesetzt, von der Bestandteil B enthaltenen Komponente getrennt zu konfektionieren.

Ferner kann die Aufteilung der weiteren Bestandteile, insbesondere der festen Bestandteile davon abhängen, in welchen Mengen diese in der Zusammensetzung enthalten sein soll. Durch entsprechende Aufteilung kann sich gegebenenfalls ein höherer Anteil, bezogen auf die gesamte Zusammensetzung ergeben.

Es ist auch möglich, dass eine Komponente lediglich den Bestandteil B enthält. Alternativ kann der Bestandteil B zusammen mit anderen Bestandteilen, wie Weichmachern, Additiven und/oder Füllstoffen, in einer Komponente des Zweikomponenten-Systems enthalten sein.

Der Bestandteil C kann dabei als Gesamtmischung oder in Einzelkomponenten aufgeteilt in einer Komponente oder mehreren Komponenten enthalten sein. Die Aufteilung des Bestandteils C erfolgt abhängig von der Verträglichkeit der in der Zusammensetzung enthaltenen Verbindungen, so dass weder eine Reaktion der in der Zusammensetzung enthaltenen Verbindungen untereinander bzw. eine gegenseitige Störung noch eine Reaktion dieser Verbindungen mit den Verbindungen der anderen Bestandteile erfolgen kann. Dies ist von den verwendeten Verbindungen abhängig.

Bevorzugt ist der Bestandteil C, der mindestens einen Kohlenstofflieferant, mindestens ein Treibmittel und mindestens einen Dehydrierungskatalysator umfasst, derart auf die Komponente I und die Komponente II aufgeteilt, dass diese Verbindungen (Einzelbestandteile des dämmschichtbildenden Bestandteils) und die anderen Bestandteile, d.h. Bestandteile (A) und (B), der Zusammensetzung reaktionsinhibierend getrennt sind. Hierdurch wird sichergestellt, dass ein möglichst hoher Anteil an Füllstoffen erzielt werden kann. Dies führt zu einer hohen Intumeszenz, selbst bei geringen Schichtdicken der Zusammensetzung.

Enthält das dämmschichtbildende Additiv einen Aschekrustenstabilisator, so kann dieser entweder in der Komponente I oder in der Komponente II enthalten sein. Alternativ kann der Aschekrustenstabilisator auch auf die beiden Komponenten I und II aufgeteilt sein. Dementsprechend ist der Aschekrustenstabilisator derart auf die Komponente I und die Komponente II aufgeteilt, dass die Komponente I oder die Komponente II zumindest einen Teil des Aschekrustenstabilisators und die Komponente II oder die Komponente I gegebenenfalls einen weiteren Teil des Aschekrustenstabilisators enthält.

Die Zusammensetzung wird als Paste mit einem Pinsel, einer Rolle oder durch Sprühen auf das Substrat, insbesondere metallische Substrat aufgebracht. Bevorzugt wird die Zusammensetzung mittels eines Airless-Sprühverfahrens aufgebracht.

Die erfindungsgemäße Zusammensetzung zeichnet sich, verglichen mit den lösemittel- und wasserbasierten Systemen und dem System gemäß der WO 2010/131037 A1, durch eine relativ schnelle Aushärtung durch eine Hydrolyse und anschließende Polykondensationsreaktion und damit nicht notwendige physikalische Trocknung aus. Über den Wassergehalt in der Zusammensetzung können darüber hinaus die Aushärteeigenschaften und die Eigenschaften der getrockneten (ausgehärteten) Zusammensetzung gesteuert werden. Dies ist insbesondere dann sehr wichtig, wenn die beschichteten Bauteile schnell belastet bzw. weiterverarbeitet werden müssen, sei es durch Beschichtung mit einer Deckschicht oder ein Bewegen oder Transportieren der Bauteile. Auch ist die Beschichtung somit deutlich weniger anfällig gegenüber äußeren Einflüssen auf der Baustelle, wie z.B. Beaufschlagung mit (Regen)-wasser oder Staub und Schmutz, welche in lösemittel- oder wasserbasierten Systemen zu einem Auswaschen von wasserlöslichen Bestandteilen, wie dem Ammoniumpolyphosphat, führen kann, bzw. bei der Aufnahme von Staub zu einer reduzierten Intumeszenz. Aufgrund des niedrigen Erweichungspunktes des Bindemittels und des hohen Feststoffanteils, ist selbst bei geringer Schichtdicke die Expansionsrate bei Hitzeeinwirkung hoch.

Deshalb ist die erfindungsgemäße zwei- oder mehrkomponentige Zusammensetzung als Beschichtung, insbesondere als Brandschutzbeschichtung, bevorzugt sprühbare Beschichtung für Substrate auf metallischer und nicht metallischer Basis geeignet. Die Substrate sind nicht beschränkt und umfassen Bauteile, insbesondere Stahlbauteile und Holzbauteile, aber auch einzelne Kabel, Kabelbündel, Kabeltrassen und Kabelkanäle oder andere Leitungen.

Die erfindungsgemäße Zusammensetzung findet vor allem im Baubereich als Beschichtung, insbesondere Brandschutzbeschichtung für Stahlkonstruktionselemente, aber auch für Konstruktionselemente aus anderen Materialien, wie Beton oder Holz, sowie als Brandschutzbeschichtung für einzelne Kabel, Kabelbündel, Kabeltrassen und Kabelkanäle oder andere Leitungen Verwendung.

Ein weiterer Gegenstand der Erfindung ist daher die Verwendung der erfindungsgemäßen Zusammensetzung als Beschichtung, insbesondere als Beschichtung für Konstruktionselemente oder Bauelemente aus Stahl, Beton, Holz und anderen Materialien, wie etwa Kunststoffen, insbesondere als Brandschutzbeschichtung.

Die vorliegende Erfindung betrifft auch Objekte, die erhalten werden, wenn die erfindungsgemäße Zusammensetzung ausgehärtet ist. Die Objekte haben ausgezeichnete dämmschichtbildende Eigenschaften.

Die folgenden Beispiele dienen der weiteren Erläuterung der Erfindung.

## AUSFÜHRUNGSBEISPIELE

Für die Herstellung von erfindungsgemäßen dämmschichtbildenden Zusammensetzungen verwendet man die nachfolgend aufgelisteten Bestandteile. Es werden jeweils die Einzelkomponenten mit Hilfe eines Dissolvers vermengt und homogenisiert. Für die Anwendung werden diese Mischungen dann entweder vor dem Versprühen oder bevorzugt während des Versprühens vermischt und appliziert.

Es wurden jeweils das Aushärteverhalten der Zusammensetzung beobachtet, anschließend der Intumeszenzfaktor und die relative Aschekrustenstabilität bestimmt. Hierzu wurde die Massen jeweils in eine runde Teflon-Form mit etwa 2 mm Tiefe und 48 mm Durchmesser gegeben. Die Proben wurden bei einer Temperatur von +22°C und einer relativen Luftfeuchtigkeit von 35% ausgehärtet.

Für die Bestimmung der Aushärtezeit wurden keilförmige Proben (1-10 mm) gegossen. Die Aushärtezeit entspricht dabei der Zeit, bei der die Schichtdicke die $h_A$ durchgehärtet war.

Zur Bestimmung des Intumeszenzfaktors und der relativen Aschekrustenstabilität wurde ein Muffelofen auf 600°C vorgeheizt. Es wurde eine Mehrfachmessung der Probendicke mit der Schieblehre durchgeführt und der Mittelwert $h_M$ berechnet. Dann wurden die Proben jeweils in eine zylindrische Stahlform eingebracht und für 30 min im Muffelofen erhitzt. Nach Abkühlen auf Raumtemperatur wurde die Schaumhöhe $h_{E1}$ zunächst zerstörungsfrei bestimmt (Mittelwert einer Mehrfachmessung). Der Intumeszenzfaktor $I$ berechnet sich wie folgt:

$$\text{Intumeszenzfaktor I:} \qquad I = h_{E1} : h_M$$

Anschließend ließ man in der zylindrischen Stahlform ein definiertes Gewicht (m = 105 g) aus einer definierten Höhe (h = 100 mm) auf den Schaum fallen und bestimmte die nach dieser teilweise zerstörenden Einwirkung verbleibende Schaumhöhe $h_{E2}$. Die relative Aschekrustenstabilität wurde wie folgt berechnet:

$$\text{relative Aschekrustenstabilität (AKS):} \quad AKS = h_{E2} : h_{E1}$$

Für das Vergleichsbeispiel und die folgenden Beispiele 1 bis 3 wurde als Bestandteil C folgende Zusammensetzung hergestellt und die Mischung in der jeweils angegebenen Menge eingesetzt:

*Bestandteil C:*

| Verbindungen | Menge [g] |
|---|---|
| Pentaerythrit | 8,7 |
| Melamin | 8,7 |
| Ammoniumpolyphosphat | 16,6 |
| Titandioxid | 7,9 |

**Vergleichsbeispiel 1**

*Bestandteil A*

| Verbindungen | Menge [g] |
|---|---|
| Dimethoxy(methyl)silylmethylcarbamatterminierter Polyether [1] | 11,0 |
| Vinyldimethoxymethylsilan [2] | 0,5 |
| Di-(2-ethylhexyl)adipat [3] | 2,2 |
| 3-Aminopropyltriethoxysilan [4] | 0,3 |
| [1] GENIOSIL® STP-E 10 (Gehalt Methoxygruppen ca. 0,4-0,5 mmol/g) [2] GENIOSIL® XL 12 (Wasserfänger) [3] Plastomoll® DOA (Weichmacher) [4] Dynasylan® AMEO (Vernetzungsmittel) | |

*Bestandteil C*

| Verbindungen | Menge [g] |
|---|---|
| wie oben angegeben | 21,0 |

**Vergleichsbeispiel 2**

Als Vergleich diente ein auf wässriger Dispersionstechnologie basiertes kommerzielles Brandschutzprodukt (Hilti CFP S-WB).

**Vergleichsbeispiel 3**

Als weiter Vergleich diente ein Standard-Epoxy-Amin-System (Jeffamin® T-403, flüssiges, lösemittelfreies und kristallisationsstabiles Epoxidharz, bestehend aus niedermolekularen Epoxidharzen auf Basis Bisphenol A und Bisphenol F (Epilox® AF 18-30, Leuna-Harze GmbH) und 1,6-Hexandioldiglycidylether), das zu 60 % mit einem Intumeszenzgemisch analog den obigen Beispielen gefüllt ist, getestet.

**Vergleichsbeispiel 4**

Als weiter Vergleich diente ein Standard-Epoxy-Amin-System (Isophorondiamin, Trimethylolpropantriacrylat und flüssiges, lösemittelfreies und kristallisationsstabiles Epoxidharz, bestehend aus niedermolekularen Epoxidharzen auf Basis Bisphenol A und Bisphenol F (Epilox® AF 18-30, Leuna-Harze GmbH)), das zu 60 % mit einem Intumeszenzgemisch analog den obigen Beispielen gefüllt ist, getestet.

**Beispiel 1**

*Bestandteil A*

| Verbindungen | Menge [g] |
|---|---|
| GENIOSIL® STP-E 10 | 10,96 |
| GENIOSIL® XL 12 | 0,47 |
| Plastomoll® DOA | 2,21 |
| Dynasylan® AMEO | 0,32 |

*Bestandteil B*

| Verbindung | Menge [g] |
|---|---|
| Wasser | 0,06 |

*Bestandteil C*

| Verbindungen | Menge [g] |
|---|---|
| wie oben angegeben | 21,0 |

**Beispiel 2**

*Bestandteil A*

| Verbindungen | Menge [g] |
|---|---|
| GENIOSIL® STP-E 10 | 10,88 |
| GENIOSIL® XL 12 | 0,48 |
| Plastomoll® DOA | 2,22 |
| Dynasylan® AMEO | 0,32 |

*Bestandteil B*

| Verbindung | Menge [g] |
|---|---|
| Wasser | 0,19 |

*Bestandteil C*

| Verbindungen | Menge [g] |
|---|---|
| Wie oben angegeben | 21,0 |

**Beispiel 3**

*Bestandteil A*

| Verbindungen | Menge [g] |
|---|---|
| GENIOSIL® STP-E 10 | 10,78 |
| GENIOSIL® XL 12 | 0,48 |
| Plastomoll® DOA | 2,20 |
| Dynasylan® AMEO | 0,32 |

*Bestandteil B*

| Verbindung | Menge [g] |
|---|---|
| Wasser | 0,32 |

*Bestandteil C*

| Verbindungen | Menge [g] |
|---|---|
| wie oben angegeben | 21,0 |

**Beispiel 4**

*Bestandteil A*

| Verbindungen | Menge [g] |
|---|---|
| GENIOSIL® STP-E 10 | 9,42 |
| GENIOSIL® XL 12 | 0,41 |
| Plastomoll® DOA | 3,77 |
| Dynasylan® AMEO | 0,27 |

*Bestandteil B*

| Verbindung | Menge [g] |
|---|---|
| Wasser | 0,14 |

*Bestandteil C*

| Verbindungen | Menge [g] |
|---|---|
| wie oben angegeben | 21,0 |

Aus den in Tabelle 1 dargestellten Ergebnissen wird zum einen deutlich, dass die Aushärtung der erfindungsgemäßen Zusammensetzungen deutlich schneller erfolgt, als die Vergleichszusammensetzung. Bereits mit einem Wassergehalt von 0,5 Gew.-% bezogen auf das Polymer, härtet eine erfindungsgemäße Zusammensetzung etwa fünfmal schneller aus als die Vergleichszusammensetzung vergleichbarer Dicke. Bei einem Wassergehalt von 1,5 % konnte die Aushärtung um den Faktor 8,5 reduziert werden.

Tabelle 1: Ergebnisse der Messungen der Aushärtezeit

| Beispiel | Probendicke $h_A$ (mm) | Aushärtezeit |
|---|---|---|
| 1 | 7 | 3 Stunden |
| 2 | 10 | 2 Stunden |
| 3 | 10 | 2 Stunden |
| 4 | 10 | 2 Stunden |
| Vergleichsbeispiel 1 | 6 | 17 Stunden |
| Vergleichsbeispiel 2 | 2 | 10 Tage |
| Vergleichsbeispiel 3 | 10 | 12 Stunden |
| Vergleichsbeispiel 4 | 10 | 1 Tag |
| [1] nicht gemessen | | |

Tabelle 2: Ergebnisse der Messungen des Intumeszenzfaktors und der Aschenkrustenstabilität

| Beispiel | Intumeszenzfaktor I (Vielfaches) | relative Aschenkrustenstabilität AKS (Vielfaches) | Probendicke $h_M$ (mm) |
|---|---|---|---|
| 1 | 18,7 | 0,25 | 1,1 |
| 2 | 19,5 | 0,32 | 1,3 |
| 3 | 15,3 | 0,30 | 1,5 |
| 4 | 20,0 | 0,26 | 1,2 |
| Vergleichsbeispiel 3 | 22 | 0,04 | 1,6 |
| Vergleichsbeispiel 4 | 1,7 | 0,60 | 1,2 |
| [1] nicht gemessen | | | |

**Patentansprüche**

1. Zweikomponenten-System, welches umfasst: eine dämmschichtbildende Zusammensetzung mit einem Bestandteil A, der einen alkoxysilanfunktionellen Polyether, welcher terminiert und/oder als Seitengruppen entlang der Polymerkette alkoxyfunktionelle Silangruppen der allgemeinen Formel (I) enthält

$$-Si(R^1)_m(OR^2)_{3-m} \qquad (I),$$

worin $R^1$ für einen linearen oder verzweigten $C_1$-$C_{16}$-Alkylrest, $R^2$ für einen linearen oder verzweigten $C_1$-$C_6$-Alkylrest und m für eine ganze Zahl von 0 bis 2 steht, mit einem Bestandteil B, der aus Wasser besteht, und mit einem Bestandteil C, der ein Gemisch enthält, das gegebenenfalls mindestens einen Kohlenstofflieferant, mindestens einen Dehydrierungskatalysator und mindestens ein Treibmittel und/oder mindestens eine thermisch expandierbare Verbindung umfasst, **dadurch gekennzeichnet, dass** die Bestandteile A und C in einer ersten Komponente und der Bestandteil B in einer von der ersten Komponente reaktionsinhibierend getrennten zweiten Komponente enthalten sind.

2. Zweikomponenten-System nach Anspruch 1, wobei der alkoxysilanfunktionelle Polyether mindestens 2 alkoxyfunktionelle Silangruppen trägt.

3. Zweikomponenten-System nach Anspruch 2, wobei der alkoxysilanfunktionelle Polyether 2 bis 8 alkoxyfunktionelle Silangruppen trägt.

**4.** Zweikomponenten-System nach Anspruch 2 oder 3, wobei der Gehalt an Alkoxygruppen des Polyethers 0,20 bis 0,85 mmol/g beträgt.

**5.** Zweikomponenten-System nach einem der vorhergehenden Ansprüche, wobei der Gehalt an Wasser in der Zusammensetzung bis zu 3 Gew.-% bezogen auf den Polyether beträgt.

**6.** Zweikomponenten-System nach einem der vorhergehenden Ansprüche wobei der Bestandteil C ferner einen Aschekrustenstabilisator enthält.

**7.** Zweikomponenten-System nach einem der vorhergehenden Ansprüche, wobei die Zusammensetzung ferner mindestens einen weiteren Bestandteil, ausgewählt unter Weichmachern, Vernetzungsmitteln, Wasserfängern, anorganischen Füllstoffen und/oder weiteren Additiven, enthält.

**8.** Verwendung des Zweikomponenten-Systems nach einem der Ansprüche 1 bis 7, als Beschichtung.

**9.** Verwendung nach Anspruch 8 für die Beschichtung von Stahlkonstruktionselementen.

**10.** Verwendung nach Anspruch 8 für die Beschichtung von nicht metallischen Bauteilen.

**11.** Verwendung nach einem der Ansprüche 8 bis 10 als Brandschutzschicht.

**12.** Gehärtete Objekte, erhalten durch Härten des Zweikomponenten-Systems nach einem der Ansprüche 1 bis 7.


**Claims**

**1.** Two-component system, which comprises: a composition forming an insulating layer with a constituent A, which contains an alkoxysilane functional polyether, which is terminated by and/or has as side groups along the polymer chain alkoxy silane groups of the general formula (I)

$$-Si(R^1)_m(OR^2)_{3-m} \qquad (I),$$

in which $R^1$ stands for a linear or branched $C_1$-$C_{16}$ alkyl residue, $R^2$ for a linear or branched $C_1$-$C_6$ alkyl residue and m for an integer from 0 to 2, with a constituent B, which consists of water, and with a constituent C, which contains a mixture, which if necessary comprises at least one carbon supplier, at least one dehydration catalyst and at least one propellant and/or at least one thermally expandable compound, **characterised in that** constituents A and C are contained in a first component and constituent B is contained in a second component separated from the first component in a way that inhibits reaction.

**2.** Two-component system according to claim 1, in which the alkoxysilane functional polyether has at least 2 alkoxy functional silane groups.

**3.** Two-component system according to claim 2, in which the alkoxysilane functional polyether has 2 to 8 alkoxy functional silane groups.

**4.** Two-component system according to claim 2 or 3, in which the content of alkoxy groups of the polyether is 0.20 to 0.85 mmol/g.

**5.** Two-component system according to one of the previous claims, in which the content of water in the compound is 3% by weight with reference to the polyether.

**6.** Two-component system according to one of the previous claims, in which the constituent C also contains an ash crust stabiliser.

**7.** Two-component system according to one of the previous claims, in which the composition also contains at least one further constituent, selected from softeners, cross-linking agents, water catchers, inorganic fillers and/or further additives.

## EP 2 935 476 B1

8. Use of the two-component system according to one of claims 1 to 7 as coating.

9. Use according to claim 8 for coating steel construction elements.

10. Use according to claim 8 for coating non-metallic structural elements.

11. Use according to one of claims 8 to 10 as fire protection layer.

12. Hardened objects, obtained by hardening the two-component system according to one of claims 1 to 7.


## Revendications

1. Système à deux composants, qui comprend une composition intumescente présentant un constituant A, qui contient un polyéther à fonctionnalité alcoxysilane, qui contient, en position terminale et/ou en tant que groupes latéraux le long de la chaîne polymère, des groupes silane à fonctionnalité alcoxy de formule générale (I)

$$-Si(R^1)_m(OR^2)_{3-m} \qquad (I)$$

dans laquelle $R^1$ représente un radical alkyle en $C_1$-$C_{16}$ à chaîne droite ou ramifiée, $R^2$ représente un radical alkyle en $C_1$-$C_6$ à chaîne droite ou ramifiée, et m représente un nombre entier de 0 à 2, un constituant B constitué d'eau, et un constituant C, qui contient un mélange qui contient éventuellement au moins une source de carbone, au moins un catalyseur de déshydrogénation et au moins un agent porogène et/ou au moins un composé pouvant subir une expansion thermique, **caractérisé en ce que** les constituants A et C sont présents dans un premier composant, et le constituant B est présent dans un deuxième composant, séparé du premier composant de manière à empêcher toute réaction.

2. Système à deux composants selon la revendication 1, dans laquelle le polyéther à fonctionnalité alcoxysilane porte au moins deux groupes silane à fonctionnalité alcoxy.

3. Système à deux composants selon la revendication 2, dans laquelle le polyéther à fonctionnalité alcoxysilane porte 2 à 8 groupes silane à fonctionnalité alcoxy.

4. Système à deux composants selon la revendication 2 ou 3, dans laquelle la teneur du polyéther en groupes alcoxy est de 0,20 à 0,85 mmol/g.

5. Système à deux composants selon l'une des revendications précédentes, dans laquelle la teneur de la composition en eau va jusqu'à 3 % en poids, par rapport au polyéther.

6. Système à deux composants selon l'une des revendications précédentes, dans laquelle le constituant C contient en outre un agent stabilisant de croûte de cendres.

7. Système à deux composants selon l'une des revendications précédentes, la composition contenant en outre au moins un constituant supplémentaire choisi parmi les plastifiants, les agents de réticulation, les fixateurs d'eau, les charges inorganiques et/ou d'autres additifs.

8. Utilisation de la Système à deux composants selon l'une des revendications 1 à 7 en tant que revêtement.

9. Utilisation selon la revendication 8 pour le revêtement d'éléments de construction métallique.

10. Utilisation selon la revendication 8, pour le revêtement de composants de construction non métallique.

11. Utilisation selon l'une des revendications 8 à 10 en tant que couche de protection contre l'incendie.

12. Objets durcis, obtenus par durcissement de la Système à deux composants selon l'une des revendications 1 à 7.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010131037 A1
- DE 102010001588 A1
- DE 102008000360 A1
- DE 102009028640 A1
- DE 102010038768 A1
- DE 102010038774 A1
- GB 2007689 A1
- EP 139401 A1
- US 3969291 A1
- EP 1489136 A1
- US 4442157 A
- US 3562197 A
- GB 755551 A
- EP 138546 A1

**In der Beschreibung aufgeführte Nicht-Patentliteratur**

- **S. V LEVCHIK ; E. D WEIL.** *Polym. Int.,* 2004, vol. 53, 1901-1929